# EUROPÄISCHE PATENTSCHRIFT

(11) **EP 1 689 053 B1**
(45) Veröffentlichungstag und Bekanntmachung des Hinweises auf die Patenterteilung: **03.12.2008**
(21) Anmeldenummer: 05002415.7
(22) Anmeldetag: 04.02.2005
(51) Int. Cl.: H01S 3/23

(54) **Regenerativer Verstärker mit internem Teleskop aus Zylinderlinsen**
Regenerative amplifier with internal telescope of cylindrical lenses
Amplificateur à réinjection comprenant un téléscope intérieur à lentilles cylindriques

(43) Veröffentlichungstag der Anmeldung: 09.08.2006
(73) Patentinhaber: TRUMPF Laser GmbH + Co. KG, 78713 Schramberg (DE)
(72) Erfinder: Sutter, Dirk, 78628 Rottweil (DE); Kumkar, Malte, 78713 Schramberg (DE); Ziolek, Carsten, 7212 Seewis Dorf (CH)
(74) Vertreter: Kohler Schmid Möbus

(56) Entgegenhaltungen:
- DE-A1- 4 229 137
- US-A- 4 276 518
- US-B2- 6 584 260
- PATENT ABSTRACTS OF JAPAN Bd. 1999, Nr. 05, 31. Mai 1999 (1999-05-31) -& JP 11 040874 A (NEC CORP), 12. Februar 1999 (1999-02-12)
- DRUON F ET AL: "12-mJ, 350-fs Yb:GdCOB regenerative amplifier" OPTICS COMMUNICATIONS, NORTH-HOLLAND PUBLISHING CO. AMSTERDAM, NL, Bd. 199, Nr. 1-4, 15. November 2001 (2001-11-15), Seiten 181-187, XP004322209 ISSN: 0030-4018
- BALEMBOIS F ET AL: "TUNABLE PICOSECOND BLUE AND ULTRAVIOLET PULSES FROM A DIODE-PUMPED LASER SYSTEM SEEDED BY A GAIN-SWITCHED LASER DIODE" APPLIED OPTICS, OPTICAL SOCIETY OF AMERICA,WASHINGTON, US, Bd. 37, Nr. 21, 20. Juli 1998 (1998-07-20), Seiten 4876-4880, XP000769802 ISSN: 0003-6935
- CHENG G ET AL: "A COMPACT TI:SAPPHIRE FEMTOSECOND PULSE AMPLIFIER WITHOUT STRETCHER AT HIGH REPETITION RATE" CHINESE OPTICS LETTERS, CN, Bd. 1, Nr. 4, 20. April 2003 (2003-04-20), Seiten 225-227, XP009044763 ISSN: 1671-7694

## Beschreibung

Die vorliegende Erfindung betrifft eine Anordnung zum Erzeugen und/oder Verstärken eines insbesondere gepulsten Laserstrahls mit annähernd rundem Strahlquerschnitt, umfassend einen Verstärkerresonator mit einem Verstärkungselement und einer Kopplungseinrichtung, die den verstärkten Laserstrahl abhängig vom Schaltzustand eines elektro-optischen oder akusto-optischen Schaltelements zumindest zum größten Teil aus dem Verstärkerresonator auskoppelt, wobei eine Strahlformungsoptik zum Umformen zwischen zwei unterschiedlichen Strahlquerschnitten des Laserstrahls vorgesehen ist, sowie einen Ultrakurzpulslaser mit einer solchen Verstärkeranordnung.

Eine derartige Verstärkeranordnung ist beispielsweise durch die JP-A-11 040 874 oder US-A-4 276 518 bekannt geworden.

Die DE 42 29 137 A1 offenbart ein gepulstes Hochleistungslasersystem, bei dem in einem Resonatorstrahlungsfeld mit rundem Strahlquerschnitt ein laserpulsbestimmender Güteschalter derart angeordnet ist, dass die aktive Länge des Resonatorstrahlungsfelds durch den Güteschalter in mindestens zwei Segmente trennbar ist. Der Güteschalter weist ein mechanisches Zerhackerrad auf, das in einem durch zwei zylindrische Parabolspiegel erzeugten, fokussierten Strahlengang des Laserstrahls mit elliptischem Strahlquerschnitt angeordnet ist.

Zur Erzeugung ultrakurzer Pulse mit hoher Pulsenergie (oberhalb von 1 µJ) werden in einem Seed-Laser ultrakurze Seed-Laserpulse mit geringer Pulsenergie erzeugt und anschließend in einem so genannten regenerativen Verstärker verstärkt, wie er beispielsweise in W. Koechner: "Solid-State Laser Engineering" (Springer Verlag, 1996) beschrieben ist. Gegebenenfalls kann der verstärkte Laserstrahl durch einen schnellen externen Modulator einzelpulsgenau leistungsmoduliert werden. Dabei stellt sich das Problem, dass bei der direkten Verstärkung der ultrakurzen Pulse Pulsspitzenleistungen erzeugt werden, die das Verstärkermedium und/oder optische Komponenten im und/oder nach dem Verstärker schädigen und/oder zu nichtlinearen Pulsverzerrungen führen. Typische Ultrakurzpulslaser-Verstärkersysteme mit Pulsdauern im Sub-Pikosekunden-Bereich basieren daher auf dem Verfahren der "Chirped-Pulse-Amplification" (CPA), bei dem die Laserpulsdauer vor der Verstärkung dispersiv verlängert und nach der Verstärkung mittels Prismen- oder in der Regel Gitterkompressoren wieder verkürzt wird. Nachteile solcher CPA-Verstärkersysteme sind ihre Komplexität und die schwierige hochgenaue Justage der dispersiven optischen Elemente sowie negative Auswirkungen auf die erreichbare Strahlqualität. Ferner ist die Effizienz des Kompressors üblicherweise gering. Der Kompressor erfordert zumeist eine lineare Polarisation des Laserlichtes, erhöht den Platzbedarf des Lasersystems und verursacht Kosten.

Um die Komplexität von Ultrakurzpulslasern zu verringern, ist es aus DE 103 04 401 A bekannt, einen Scheibenlaserkristall als Verstärkungsmedium in einem regenerativen Verstärker für die direkte Verstärkung von ultrakurzen Seed-Laserpulsen einzusetzen. Der Scheibenlaserkristall weist einen ausreichend großen Durchmesser auf, um eine zerstörerische Pulsintensität im Laserkristall (auch ohne vorheriges Dehnen, also ohne CPA) zu verhindern. In einem solchen System kann der Strahldurchmesser des Laserstrahls im Verstärker ausreichend groß gehalten werden, um eine Beeinträchtigung der optischen Elemente sowie Nichtlinearitäten zu vermeiden.

Ein regenerativer Verstärker in einem Ultrakurzpulslaser-System weist üblicherweise eine Ein/Aus-Kopplungseinrichtung auf, über die der Seed-Laserpuls in den Verstärker eingekoppelt und der verstärkte Laserpuls nach einer entsprechenden Zahl von Umläufen wieder ausgekoppelt wird. Die Kopplungseinrichtung besteht beispielsweise aus einem polarisationsabhängigen Strahlteiler, der den Laserpuls polarisationsabhängig transmittiert oder reflektiert, einem λ/4-Plättchen, das die Polarisation des im Verstärkerresonator umlaufenden Laserpulses im Doppeldurchgang um 90° dreht, und einem elektro-optischen Schalter in Form einer Pockelszelle, welche die Wirkung des λ/4-Plättchens beim Anlegen einer Schaltspannung gerade kompensiert. Der zu verstärkende Seed-Laserpuls tritt durch den Strahlteiler in den Verstärkerresonator ein. Anschließend durchläuft er das λ/4-Plättchen sowie die noch nicht unter Hochspannung stehende Pockelszelle, trifft auf den Resonator-Endspiegel und läuft durch Pockelszelle und λ/4-Plättchen zurück zum Strahlteiler. Durch den Doppeldurchgang durch das λ/4-Plättchen ist die Polarisation um 90° gedreht, so dass der Laserpuls vom Strahlteiler zum Verstärkungsmedium reflektiert wird. Nun wird die Hochspannung so an die Pockelszelle angelegt, dass für alle folgenden Umläufe die Wirkung des λ/4-Plättchens kompensiert wird. Der Laserpuls mit gedrehter Polarisation läuft also so lange im Verstärkerresonator um, wie Hochspannung an der Pockelszelle anliegt. Beim Abschalten der Hochspannung tritt eine erneute Drehung der Polarisation des Laserpulses durch das λ/4-Plättchen ein, so dass der verstärkte Laserpuls anschließend über den Strahlteiler aus dem Verstärker ausgekoppelt wird. Das λ/4-Plättchen kann entfallen, wenn während der Ein- und Auskopplung Hochspannung an der Pockelszelle angelegt wird und während der Verstärkung nicht. Derartige Verstärker sind bekannt und existieren in zahlreichen Varianten, so z. B. auch als Ringverstärker, bei dem die Endspiegel entfallen und die Pockelszelle und das Verzögerungsplättchen (λ/2-Plättchen) pro Umlauf nur einmal vom Laserpuls durchlaufen werden. Dabei bestimmt die Zeitdauer für einen einzelnen Umlauf des Laserpulses im Verstärkerresonator die Zeitanforderung an die Schaltflanke der Schalteinheit für die Hochspannung an der Pockelszelle.

Bei einer ausreichend langen Umlaufdauer des Laserpulses im Verstärker kann anstelle der oben beschriebenen elektro-optischen Ein/Aus-Kopplungseinrichtung mit einer Pockelszelle auch ein akusto-optischer Schalter verwendet werden, mit dem ebenfalls die Richtung des transmittierten Strahles geändert werden kann. Dazu wird durch einen Hochfrequenzgenerator eine akustische Schallwelle im akusto-optischen Schalter erzeugt, an welcher der Laserstrahl gebeugt wird. Die Schaltgeschwindigkeit des akusto-optischen Schalters ist unter anderem durch die Ausbreitungszeit der Schallwelle quer über den Strahldurchmesser beschränkt, also durch Schallgeschwindigkeit und Strahldurchmesser. Da das Schallfeld zum Ein- oder Auskoppeln für die Dauer des Laserpulses über den gesamten Strahlquerschnitt anliegen muss, wirkt sich die Ausdehnung des Strahls in Schallausbreitungsrichtung auch auf die erforderliche Energie des Hochfrequenzpulses aus, der zum Schalten erforderlich ist. Ausreichend lange Umlaufzeiten des Laserpulses im Verstärker können beispielsweise mit Multipass-Anordnungen erreicht werden, bei denen die im Verstärker umlaufende Strahlung mehrfach über das Verstärkungselement geführt wird.

Bei Verwendung eines regenerativen Verstärkers zur direkten Verstärkung ultrakurzer Laserpulse ohne CPA weisen die Laserpulse im Verstärker und insbesondere auch in der Kopplungseinrichtung einen verhältnismäßig großen Durchmesser auf, um Beschädigungen an den optischen Elementen zu vermeiden und den Einfluss nichtlinearer Effekte zu begrenzen. Einen solchen Laserstrahl mit großem Strahldurchmesser optisch zu schalten, erfordert eine Schaltanordnung mit entsprechend großer Apertur. Dies erhöht in der bisher üblichen und kommerziell erhältlichen Ausführung des elektro-optischen oder akusto-optischen Schalters die Schaltzeiten und/oder verringert die mögliche Taktrate. Bei transversal wirkenden Pockelszellen ist die elektrische Schaltspannung proportional zum Abstand der Elektroden und damit zur Dicke des Pockelszellen-Kristalls. Die Verlustleistung der Treiberelektronik wächst quadratisch mit dem Abstand der Elektroden.

Die Schaltspannung an der Pockelszelle kann dadurch verringert werden, dass die Pockelszelle pro Resonatorumlauf mehr als zweimal vom Strahl durchlaufen wird, so dass sich die notwendige Verzögerung auf mehrere Durchgänge durch die Pockelszelle verteilt. Es können beispielsweise Doppelzellen verwendet werden, die aus zwei Einzelzellen bestehen, welche synchron angesteuert und pro Resonatorumlauf doppelt (hin und zurück) durchlaufen werden. Die Doppelzelle kann auch aus einem einzelnen Kristall aufgebaut sein, der nebeneinander zweimal (je hin- und zurück) durchlaufen wird. In solchen Anordnungen, in denen die Verringerung der Schaltspannung durch die Verlängerung des Strahlweges durch das Pockelszellenmaterial erreicht wird, muss zur Einhaltung der maximal erlaubten nichtlinearen Pulsverzerrung die Pulsenergie proportional zur Verringerung der Schaltspannung reduziert werden. Ein weiterer Nachteil von Doppelzellen ist die höhere Anzahl der Grenzflächen, die der Strahl durchlaufen muss und an denen Verluste, z.B. durch unerwünschte Reflexion, auftreten können.

Demgegenüber ist es die Aufgabe der vorliegenden Erfindung, eine Verstärkeranordnung der eingangs genannten Art dahingehend weiterzubilden, dass die zum Schalten des optischen Schaltelements erforderliche elektrische Energie sowie die Schaltzeiten verringert werden können und dass dabei Laserpulse mit gleicher oder höherer Pulsenergie geschaltet werden können.

Diese Aufgabe wird erfindungsgemäß dadurch gelöst, dass der Laserstrahl beim Eintritt in das elektro-optische oder akusto-optische Schaltelement einen elliptischen Strahlquerschnitt aufweist, dass der Querschnitt des elektro-optischen oder akusto-optischen Schaltelements rechtwinklig zur Strahlrichtung annähernd rechteckförmig ist, dass die Strahlformungsoptik den runden Strahlquerschnitt des Laserstrahls auf einen an den rechteckförmigen Querschnitt des elektro-optischen oder akusto-optischen Schaltelements angepassten, elliptischen Strahlquerschnitt umformt, dass die elliptische Strahlquerschnittfläche größer als die kleinste runde Strahlquerschnittfläche im Strahlengang des Verstärkerresonators ist, und/oder dass der rechtwinklig zur Strahlrichtung annähernd rechteckförmige Querschnitt des elektrooptischen oder akusto-optischen Schaltelements durch eine kürzere und eine längere Seite definiert ist, wobei die Länge der kürzeren Seite kleiner und die Länge der längeren Seite größer als der größte Strahldurchmesser des runden Laserstrahls im Verstärkerresonator ist.

Unter annähernd rechteckförmig ist zu verstehen, dass der Querschnitt des optischen Schaltelements die Form eines Rechtecks, Trapezes oder Parallelogramms aufweisen kann. Geringfügige Abweichungen von der Grundform, z.B. Fasen oder Rundungen an den Kanten, entsprechen ebenfalls der erfindungsgemäßen Gestalt des Schaltelements. Allgemein sind erfindungsgemäß die Querschnittfläche der aktiven Apertur des Schaltelements und der elliptische Strahlquerschnitt aneinander angepasst. Mit aktiver Apertur des Schaltelements wird die Querschnittfläche bezeichnet, die optisch zu Schaltung nutztbar ist.

Die Geometrie des Schaltelements kann weiter optimiert werden, z.B. zur Vermeidung akustischer Resonanzeffekte. So führen in der Regel rationale Verhältnisse der Kantenlängen eines Quaders aus einem isotropen Material zur Entartung akustischer Resonanzen, welche vermieden werden sollte. Dazu ist es beispielsweise vorteilhaft, das Achsenverhältnis des optischen Schaltelements nicht im Verhältnis 3:2, sondern im Verhältnis des goldenen Schnitts zu wählen. Für größere Achsverhältnisse gelten solche Überlegungen entsprechend. Für kompliziertere und nicht isotrope Materialien können Schwingungsresonanzen berechnet und/oder vermessen und die Form des Schaltelementes optimiert werden, um unerwünschte Resonanzeffekte zu unterdrücken.

Erfindungsgemäß weist das Strahlprofil der Laserpulse im Verstärkerresonator zumindest über eine bestimmte Weglänge einen näherungsweise elliptischen Querschnitt auf, und diese elliptischen Pulse werden durch ein optisches Schaltelement geschaltet, dessen rechteckförmiger Querschnitt an das elliptische Strahlprofil angepasst ist oder umgekehrt. Gegenüber den bisher üblichen Geometrien von optischen Schaltern für runde Strahlprofile, die rechtwinklig zur Strahlrichtung einen quadratischen Querschnitt aufweisen, bietet dies bei elektrooptischen Schaltern den Vorteil einer besseren Kühlung des Modulators, einer geringeren Verlustleistung in der Treiberelektronik sowie einer höheren Schaltgeschwindigkeit bzw. Taktrate bei gleicher Pulsenergie. Bei akusto-optischen Schaltern werden geringere Schaltzeiten sowie eine Minderung der erforderlichen mittleren Treiberleistung erreicht. Dabei bietet der elliptische Strahlquerschnitt eine höhere Flexibilität bei der Wahl der Querschnittfläche des optischen Schaltelements, um eine ausreichend geringe Pulsintensität zur Vermeidung von Beschädigungen und/oder übermäßigen nichtlinearen Pulsverzerrungen zu erreichen.

Der Strahldurchmesser in Richtung der kürzeren Ellipsenachse kann geringer als der Durchmesser des runden Strahls gewählt werden, so dass auch die Länge der kürzeren Seite des rechteckförmigen optischen Schaltelements kleiner sein kann als der runde Strahldurchmesser. Hierbei wird die Länge der längeren Seite größer als der Strahldurchmesser des runden Laserstrahls gewählt und der elliptische Laserstrahl kann die gleiche Maximalintensität (Flächenleistungsdichte) wie der runde Eingangslaserstrahl aufweisen. In diesem Fall können die Schaltzeiten verringert werden. Pro Schaltvorgang tritt außerdem bei elektrooptischen Schaltelementen eine geringere elektrische Verlustleistung auf. So benötigt ein elliptischer Strahl mit einem Achsenverhältnis 4:1, der verglichen mit dem runden Strahl in seiner einen Achse auf die Hälfte gestaucht und in seiner anderen Achse auf das Doppelte gestreckt wird, eine nur halb so hohe (wenn auch doppelt so breite) Pockelszelle und somit nur die halbe Schaltspannung, was thermisch einer ca. 4-fachen Taktrate bei gleicher Kühlung entspricht. Größere Elliptizitäten, z.B. mit einem Achsenverhältnis 16:1, ermöglichen eine noch weitere Reduzierung der Schaltspannung und Erhöhung der Taktrate.

Ist die Strahlquerschnittfläche des geformten Laserstrahls größer als die runde Strahlquerschnittfläche des Eingangslaserstrahls, so ermöglicht dies die Erzeugung und Schaltung von Laserpulsen mit höherer Pulsenergie bei gleichbleibender Schaltgeschwindigkeit. So können bei Vervierfachung der Strahlquerschnittfläche beispielsweise Pulse mit vervierfachter Pulsenergie geschaltet werden. Auch eine Absenkung der Schaltspannung ist möglich, da beispielsweise bei gleicher Pulsenergie und gesteigerter Strahlquerschnittfläche vergleichbare Pulsverzerrungen durch Nichtlinearitäten erst bei größerer Länge des Schaltelements auftreten.

Die Vergrößung der Querschnittfläche des elliptischen Laserstrahls gegenüber dem runden Laserstrahl erfolgt entweder bereits in der Strahlformungsoptik oder durch eine zusätzliche Opik, wie z.B. ein zweites Teleskop im Resonator, das den Querschnitt der Laserpulse ohne weitere Änderung des Achsenverhältnisses vergrößert.

Die erfindungsgemäße Anordnung lässt sich analog auch zur Erzeugung eines gepulsten Laserstrahls mittels Auskoppelmodulation (gebräuchlichere Bezeichnung: engl. "cavity dumping") nutzen. Hierbei wird kein Seed-Laserpuls in den Resonator eingekoppelt, sondern die Laserpulse werden direkt im Resonator erzeugt. Das optische Schaltelement dient dazu, die im Resonator umlaufende Strahlung auf einmal aus dem Resonator auszukoppeln, wie es beispielsweise in W. Koechner: "Solid-State Laser Engineering" (Springer Verlag, 1996) beschrieben ist. Ist im Resonator außerdem ein optisches Element zur Modenkopplung vorhanden, so werden direkt ultrakurze Laserpulse erzeugt. Wird mit Hilfe des optischen Schaltelements nicht die gesamte Strahlung ausgekoppelt, sondern ein geringer Teil im Resonator belassen, so wirkt dieser Anteil der Strahlung analog zu einem Seed-Laserpuls in einer Verstärkeranordnung. Auch beim auskoppelmodulierten Oszillatorbetrieb mit Modenkopplung ist es das Ziel, ultrakurze Laserpulse mit möglichst hoher Pulsenergie zu erzeugen und diese möglichst schnell zu schalten, was durch die Verwendung eines rechteckförmigen optischen Schaltelements und einen darauf angepassten elliptischen Strahlquerschnitt im Resonator vereinfacht wird.

In einer erfindungsgemäßen auskoppelmodulierten Oszillatoranordnung ist die Strahlformungsoptik innerhalb des Resonators angeordnet. Bei einer Verstärkeranordnung kann die Strahlformungsoptik innerhalb oder außerhalb des Verstärkerresonators angeordnet sein. Im ersteren Fall ist die Strahlformungsoptik im Verstärkerresonator vorzugsweise zwischen der Kopplungseinrichtung und einem Endspiegel angeordnet, so dass der Laserstrahl nach dem Doppeldurchgang durch die Strahlformungsoptik wieder mit rundem Strahlquerschnitt auskoppelbar ist. Im letzteren Fall ist vorteilhafterweise im Verstärkerresonator eine weitere Strahlformungsoptik angeordnet, die den elliptischen Strahlquerschnitt der eingekoppelten Laserpulse wieder in einen runden Strahlquerschnitt umformt, wenn das Verstärkungselement einen runden Querschnitt aufweist.

In einer Ausführungsform der Erfindung umfasst die Strahlformungsoptik zur Erzeugung eines elliptischen Strahlquerschnitts mindestens ein anamorphotisches Prismenpaar. Dadurch wird die Strahlquerschnittfläche des annähernd runden Eingangsstrahls in einer Raumrichtung vergrößert oder verkleinert.

In einer bevorzugten Ausführungsform der Erfindung ist die Strahlformungsoptik als Teleskop insbesondere mit anamorphotischen Linsen ausgebildet. Dazu werden beispielsweise eine zylindrische Plankonvexlinse und eine zylindrische Plankonkavlinse mit ihren Planseiten und um 90° gegeneinander gedrehter Symmetrieachse zusammengefügt. Das Teleskop wird aus zwei solchen Linsenpaaren mit gegeneinander um 90° gedrehter Symmetrieachse gebildet. Das Teleskop formt beispielsweise durch Verdreifachung des Pulsdurchmessers in der einen Richtung und Drittelung des Pulsdurchmessers in der dazu rechtwinkligen Richtung elliptische Pulse mit einem Achsenverhältnis von 9:1, welche die gleiche Intensität wie die runden Eingangspulse aufweisen. Die Auslegung des Teleskops wird so gewählt, dass mögliche Zwischenfoki ausreichend groß sind und an geeigneter Position auftreten, um nichtlineare Effekte, Luftdurchbrüche, sowie Schädigung optischer Komponenten zu vermeiden. Die Ausführung der Strahlformungsoptik als Teleskop ist vorteilhaft, da der Strahlengang nur in dem Resonatorarm beeinflusst wird, in dem das optische Schaltelement angeordnet ist.

In einer anderen bevorzugten Ausführungsform weist die Strahlformungsoptik zwei zum einfallenden Laserstrahl verkippte gekrümmte Spiegel auf. Von Vorteil sind dabei sphärische Konkavspiegel mit im Vergleich zum Strahldurchmesser ausreichend großer Brennweite, um übermäßige Abbildungsfehler zu vermeiden. Beide Spiegel können denselben Krümmungsradius aufweisen. Der Einfallswinkel kann zum Erreichen einer bestimmten Vergrößerung/Verkleinerung frei gewählt werden.

Alternativ können statt der Spiegel auch zum Laserstrahl verkippte Linsen zum Einsatz kommen. Alternativ können auch Toroidspiegel zur Strahlformung eingesetzt werden. Alternativ können die anamorphotischen Linsen auch als Gradientenlinsen ausgeführt sein.

Eine weitere vorteilhafte Ausführungsform der Erfindung sieht vor, dass die Kopplungseinrichtung einen polarisationsabhängigen Strahlteiler und das optische Schaltelement eine Pockelszelle aufweist. Für die Pockelszelle kommen sämtliche bekannten Pockelszellenmaterialien in Frage, z.B. BBO, KD*P, RTP und andere, sowie gebondete Materialien. Das optische Schaltelement kann zur weiteren Reduzierung der Schaltspannung und/oder zur Kompensation von thermischer Doppelbrechung aus mehreren Zellen ausgeführt sein, beispielsweise in Form einer Doppelzelle aus zwei Kristallen, die unter Hochspannung jeweils nur eine Verzögerung um ein Achtel der Wellenlänge bewirken.

In einer anderen vorteilhaften Ausführungsform der Erfindung sind sowohl die Kopplungseinrichtung als auch das optische Schaltelement durch einen akusto-optischen Schalter gebildet. Bei einem rechteckförmigen akusto-optischen Schalter wird im Vergleich zu einem Schalter mit quadratischem Querschnitt eine geringere HF-Treiberleistung benötigt, wenn die Piezo-Transducer an den kurzen Seiten des Schalters angebracht sind. Werden die Piezo-Transducer dagegen an den langen Seiten des Schalters angebracht, so verringert sich die Schaltzeit.

Die vorliegende Erfindung betrifft auch einen Ultrakurzpulslaser mit einem Seed-Laser zur Erzeugung von Seed-Laserpulsen und mit einer wie oben beschriebenen Anordnung zum Verstärken der Seed-Laserpulse. Dieser erfindungsgemäße Ultrakurzpulslaser ermöglicht ein schnelles Schalten von ultrakurzen Laserpulsen mit möglichst geringer Schaltspannung sowie eine hohe Verstärkung der Seed-Laserpulse.

Die vorliegende Erfindung betrifft auch einen Ultrakurzpulslaser mit einer wie oben beschriebenen Anordnung zur Erzeugung und Verstärkung von Laserpulsen und einem optischen Element zur Modenkopplung, das innerhalb des Laserresonators angeordet ist. Dieser erfindungsgemäße Ultrakurzpulslaser ermöglicht die Erzeugung von Laserpulsen mit hoher Pulsenergie und schnelle Auskopplung dieser Pulse.

Weitere Vorteile der Erfindung ergeben sich aus der Beschreibung und den Zeichnungen. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: ein erstes Ausführungsbeispiel der erfindungsgemäßen Verstärkeranordnung mit einem elektro-optischen Schalter (Pockelszelle) in einer Seitenansicht (Fig. 1a) und in einer Draufsicht (Fig. 1 b);
- Fig. 2: die Ansicht der in Fig. 1 gezeigten Pockelszelle in Strahlrichtung;
- Fig. 3: ein zweites Ausführungsbeispiel der erfindungsgemäßen Verstärkeranordnung mit einem akusto-optischen Schalter in einer Seitenansicht (Fig. 3a) und in einer Draufsicht (Fig. 3b);
- Fig. 4: eine als Periskop-Teleskop ausgebildete Strahlformungsoptik;
- Fig. 5: ein drittes Beispiel einer erfindungsgemäßen Verstärkeranordnung in einer Ausführung als Ringresonator mit einem elektro-optischen Schalter (Pockelszelle); und
- Fig. 6: eine schematische Darstellung eines erfindungsgemäßen Ultrakurzpulslasers.

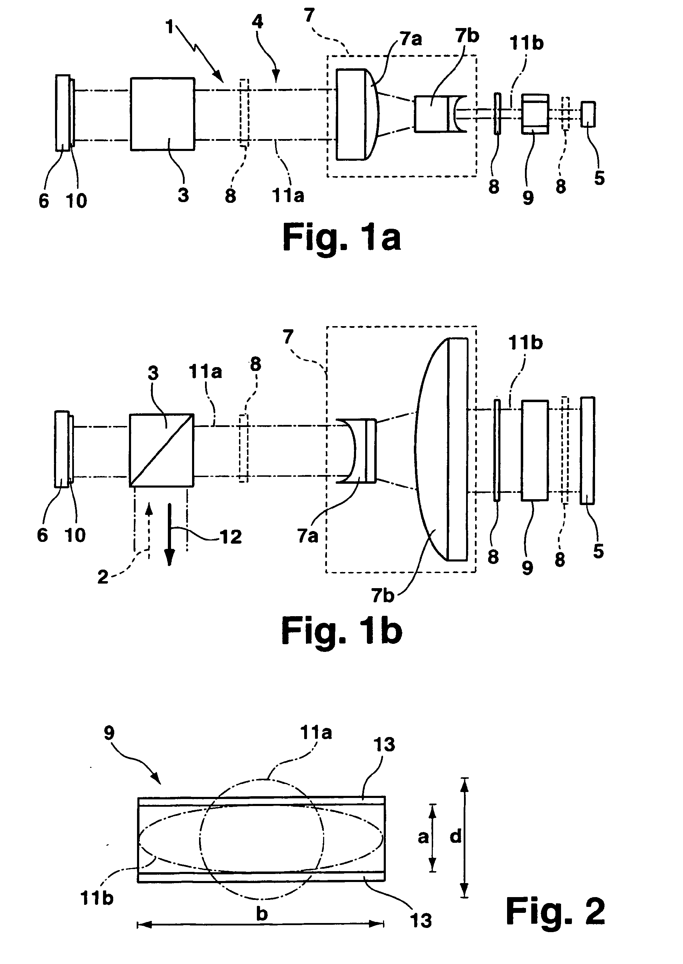

Die in Fig. 1 gezeigte Anordnung 1 dient als auskoppelmodulierte Oszillatorausführung dazu, einen gepulsten Ausgangslaserstrahl 12 zu erzeugen und auszukoppeln. Als Verstärkerausführung dient die Anordnung 1 zum Einkoppeln und Verstärken eines gepulsten Eingangslaserstrahls 2 mit rundem Strahlquerschnitt, z.B. eines Seed-Laserstrahls, und zum Auskoppeln eines verstärkten Laserstrahls 12.

Der zu verstärkende Eingangslaserstrahl 2 wird über einen polarisationsabhängigen Strahlteiler 3 in einen Verstärkerresonator 4 eingekoppelt, welcher endseitig jeweils einen hochreflektierenden Rückspiegel 5, 6 aufweist. Das runde Strahlprofil des eingekoppelten Laserpulses wird dann in einer Strahlformungsoptik 7 in einen elliptischen Querschnitt umgeformt. Der elliptische Laserpuls durchläuft anschließend ein λ/4-Plättchen 8 sowie eine noch nicht unter Hochspannung stehende Pockelszelle 9, trifft auf den Rückspiegel 5 und läuft durch Pockelszelle 9, λ/4-Plättchen 8 und Strahlformungsoptik 7, welche den Laserpuls wieder in einen runden Querschnitt umformt, zurück zum Strahlteiler 3. Durch den Doppeldurchgang durch das λ/4-Plättchen 8 ist die Polarisation des Laserpulses um 90° gedreht, so dass der Laserpuls vom Strahlteiler 3 zum Verstärkungselement (z.B. Scheibenlaserkristall) 10 durchgelassen wird. Nach Durchlauf durch das Verstärkerelement 10 wird der Laserpuls am Rückspiegel 6, der durch die verspiegelte Rückseite des Verstärkungselements 10 gebildet sein kann, reflektiert und durchläuft erneut das Verstärkerelement 10. Zwischenzeitlich ist an die Pockelszelle 9 solch eine Hochspannung angelegt, dass für alle folgenden Umläufe des Laserpulses im Verstärkerresonator 4 die vom λ/4-Plättchen 8 bewirkte Polarisationsdrehung von der Pockelszelle 9 kompensiert wird. Der im Verstärkerresonator 4 umlaufende Laserpuls hat zwischen linkem Rückspiegel 6 und Strahlformungsoptik 7 einen runden Strahlquerschnitt (runder Laserpuls **11a)** und zwischen Strahlformungsoptik 7 und rechtem Rückspiegel 5 einen elliptischen Strahlquerschnitt (elliptischer Laserpuls 11b). Der Laserpuls mit um 90° gedrehter Polarisation läuft so lange im Verstärkerresonator 4 um, wie die Hochspannung an der Pockelszelle 9 anliegt.

Nach Abschalten der Hochspannung tritt eine erneute 90°-Drehung der Polarisation des Laserpulses durch das λ/4-Plättchen 8 ein, so dass der Laserpuls nun über den polarisationsabhängigen Strahlteiler 3 als verstärkter Laserpuls 12 mit rundem Strahlquerschnitt aus dem Verstärkerresonator 4 ausgekoppelt wird.

Das λ/4-Plättchen 8 kann entfallen, wenn während der Ein- und Auskopplung Hochspannung an die Pockelszelle 9 angelegt wird und während der Verstärkung nicht. Wie in Fig. 1 gestrichelt angedeutet, kann das λ/4-Plättchen 8 alternativ auch zwischen Pockelszelle 9 und rechtem Rückspiegel 5 oder zwischen Strahlteiler 3 und der Strahlformungsoptik 7 angeordnet sein.

In einer auskoppelmodulierten Oszillatorausführung der Anordnung 1 wird kein Eingangslaserstrahl in die Anordnung 1 eingekoppelt. Die durch spontane Emission gestartete Laserstrahlung läuft so lange im Resonator um, wie an der Pockelszelle 9 Spannung anliegt. Durch die im Resonator befindliche Strahlformungsoptik 7 wird der Strahlquerschnitt der umlaufenden Laserstrahlung an die Geometrie des Verstärkungselements 10 und der Pockelszelle 9 angepasst. Beim Abschalten der Hochspannung an der Pockelszelle wird die Polarisation der Laserstrahlung um 90° gedreht, so dass der Ausgangslaserstrahl 12 ausgekoppelt wird. Verbleibt dabei ein geringer Anteil der Laserstrahlung im Resonator, so wirkt dieser Anteil nach erneutem Anlegen der Hochspannung an der Pockelszelle 9 wie ein Seed-Laserpuls in der Verstärkeranordnung. Zum Erzeugen ultrakurzer Pulse ist in der Anordnung 1 ein Modenkopplungselement angeordnet. Dazu kann beispielsweise der Endspiegel 5 als sättigbarer Absorberspiegel ausgeführt sein.

Die Strahlformungsoptik 7 ist als Teleskop aus zwei Dopplellinsen 7a und 7b ausgebildet. Diese Doppellinsen 7a, 7b bestehen jeweils aus einer zylindrischen Plankonvexlinse und einer zylindrischen Plankonkavlinse, deren Symmetrieebenen gegeneinander um 90° verdreht sind und die mit ihren Planseiten miteinander verkittet sein können. In der Seitenansicht 1 a verringert die Doppellinse 7a den Halbmesser des Laserpulses, in der Draufsicht 1b vergrößert sie ihn, während die in ihrer Wirkungsweise gegenüber der ersten Linse 7a um 90° verdrehte Doppellinse 7b in beiden Richtungen den Strahl wieder kollimiert. Das Teleskop formt beispielsweise durch Drittelung des Pulsdurchmessers in der einen Richtung und Verdreifachung des Pulsdurchmessers in der dazu rechtwinkligen Richtung elliptische Pulse mit einem Achsenverhältnis 1:9.

Wie Fig. 2 zeigt, ist der Querschnitt der Pockelszelle 9 ein Rechteck, dessen kürzere Rechteckseite bzw. der Abstand a der beiden Elektroden 13 kleiner als der Strahldurchmesser d des runden Laserpulses 11a ist. Variieren der runde bzw. der elliptische Strahldurchmesser im Verstärkerresonator, so dienen hierbei als Bezugsebenen für den Strahldurchmesser die Ebenen, an denen Schaltelemente mit quadratischer oder rechteckförmiger Querschnittsfläche sinnvoll angeordnet sein könnten. Der rechteckige Querschnitt der Pockelszelle 9 ist an den elliptischen Strahlquerschnitt des Laserpulses 11 b angepasst, oder umgekehrt. Im gezeigten Ausführungsbeispiel beträgt das Achsenverhältnis b/a des elliptischen Laserpulses 11 b 9:1, es kann aber auch andere Werte annehmen. Im Vergleich zu einer Pockelszelle für den runden Laserpuls 11 a ist die Pockelszelle 9 nur ein Drittel so hoch (wenn auch dreimal so breit), und somit ist auch nur ein Drittel der Schaltspannung erforderlich, was thermisch einer ca. 9-fachen Taktrate bei gleicher Kühlung entspricht. Wenn die Querschnittfläche des elliptischen Laserpulses 11 b größer als die des runden Laserpulses 11a ist, so wird die Energie des elliptischen Laserpulses 11 b auf eine größere Fläche als beim runden Laserpuls 11a verteilt, was bei gleichbleibender Schaltgeschwindigkeit die Erzeugung und Schaltung von Laserpulsen mit höherer Pulsenergie ermöglicht, ohne die maximale Intensität zu überschreiten, oberhalb derer Schäden an der Pockelszelle 9 oder dem Endspiegel 5 oder übermäßige nichtlineare Pulsverzerrungen auftreten würden.

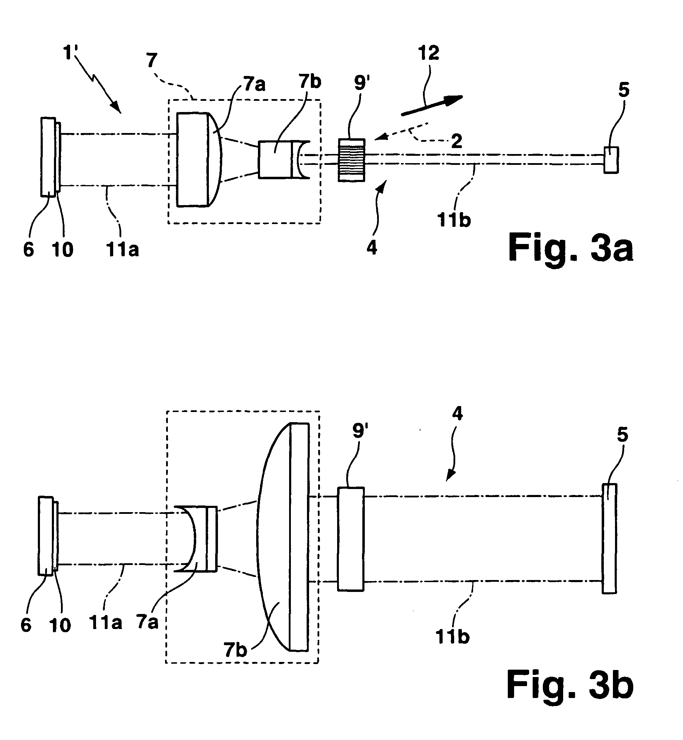

Von der Verstärkeranordnung 1 der Fig.1 unterscheidet sich die in Fig. 3 gezeigte Verstärkeranordnung 1' dadurch, dass statt Strahlteiler, Pockelszelle und λ/4-Plättchen ein akusto-optischer Schalter 9' zur Ein- und Auskopplung des Laserstrahls in bzw. aus dem Verstärkerresonator 4 vorgesehen ist. Beim Ein- und Auskoppeln wird durch einen Hochfrequenzgenerator im akusto-optischen Schalter 9' eine akustische Schallwelle erzeugt, an der der Laserstrahl gebeugt wird. Analog zur Pockelszelle 9 hat auch der akusto-optische Schalter 9' einen rechteckigen Querschnitt, der an den elliptischen Strahlquerschnitt des Laserpulses 11 b angepasst ist. Bei der Verstärkeranordnung 1' ist es erforderlich, die zu verstärkenden Laserpulse 2 bereits außerhalb des Verstärkerresonators 4 auf einen elliptischen Strahlquerschnitt umzuformen. Bei runden Seed-Laserpulsen ist dazu eine weitere Strahlformungseinheit (nicht gezeigt) außerhalb des Verstärkerresonators 4 angeordnet. Innerhalb des Verstärkerresonators 4 ist eine Strahlformungseinheit 7 so angeordnet, dass der Strahlquerschnitt im akusto-optischen Schalter 9' elliptisch und im Verstärkerelement 10 rund ist. Die Schaltgeschwindigkeit des akusto-optischen Schalters 9' ist unter anderem durch die Ausbreitungszeit der Schallwelle quer über den Strahldurchmesser, also durch Schallgeschwindigkeit und Strahldurchmesser, beschränkt. Im Vergleich zu einem akusto-optischen Schalter für den runden Laserpuls 11 a ist der akusto-optische Schalter 9' beispielsweise nur halb so hoch (wenn auch doppelt so breit), was somit doppelt so schnelle Schaltflanken erlaubt. Auch die Anordnung 1' ist, analog zur Anordnung 1, als auskoppelmodulierter Oszillator betreibbar. Dabei kann der akusto-optische Schalter 9' gleichzeitig als Modenkopplungselement wirken.

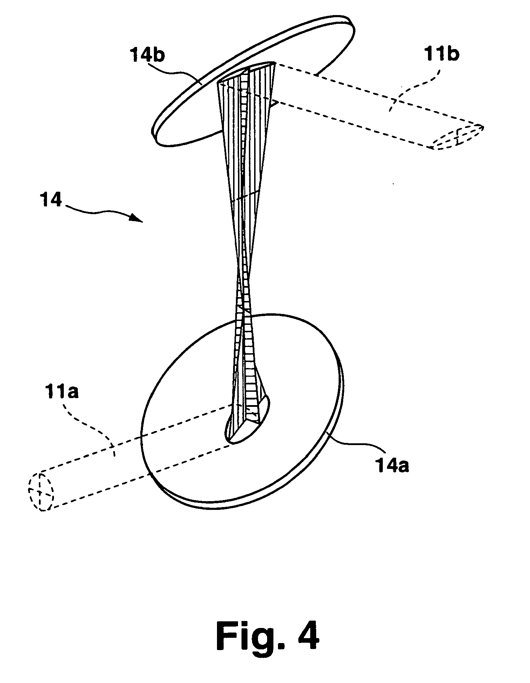

Fig. 4 zeigt eine andere Strahlformungsoptik 14 zum Umformen des runden Laserpulses 11a in einen elliptischen Laserpuls 11b. Die Strahlformungsoptik 14 ist als Periskopteleskop mit zwei zum Strahl verkippten sphärischen Konkavspiegeln 14a, 14b ausgebildet. Die Konkavspiegel 14a, 14b haben eine ausreichende Brennweite, um übermäßige Abbildungsfehler und zu kleine Foki zu vermeiden, in denen aufgrund hoher Strahlintensität bereits in Luft nichtlineare Effekte auftreten könnten, und können denselben Krümmungsradius aufweisen. Durch plane Umlenkspiegel zwischen den Periskopspiegeln kann die Bauhöhe reduziert werden. Der Einfallswinkel ϕ bei den Periskopspiegeln kann zum Erreichen einer bestimmten Vergrößerung oder Verkleinerung frei gewählt werden. Für ein Periskop aus zwei Konkavspiegeln mit gleichem Krümmungsradius ergibt sich eine Strahl-Elliptizität von 1/cos⁴ϕ. Für Einfallswinkel von ϕ=45° entsprechend einer Umlenkung von jeweils 90° ergibt sich mit cos(45°)=1/√2 eine Verdopplung des Strahlhalbmessers in der einen Richtung und eine Halbierung in der dazu senkrechten Richtung und somit ein Achsverhältnis von 4:1. Größere Elliptizitäten können mit anderen Einfallswinkeln erreicht werden, so z.B. ein Achsenverhältnis von 16:1 bei einem Einfallswinkel von 60°. Größere Achsenverhältnisse sind praktisch wenig sinnvoll.

Der Einsatz von Teleskopen im Resonator wirkt sich auch aufgrund der durch das Teleskop bewirkten Strahlwegsverlängerung vorteilhaft aus, was die Anforderung an die Schaltgeschwindigkeit und Flankensteilheit des optischen Schaltelements 9, 9' entsprechend senkt.

In nicht gezeigten Ausführungsformen der Verstärkeranordnung ist die Strahlformungsoptik außerhalb des Verstärkerresonators angeordnet.

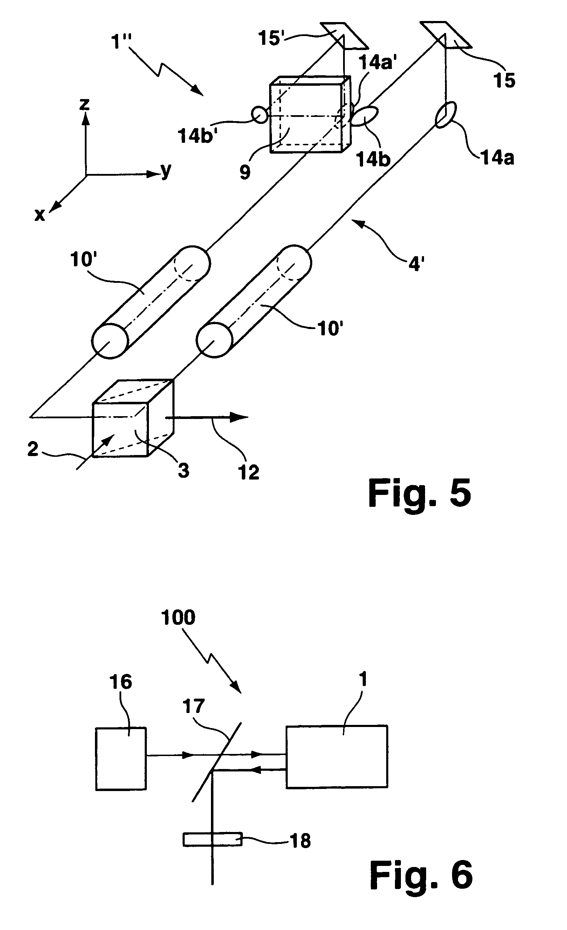

Fig. 5 zeigt eine weitere Verstärkeranordnung 1" in einer Ausführung als Ringresonator mit zwei stabförmigen Verstärkungselementen 10'. Ein zu verstärkender Laserpuls 2 wird über den polarisationsabhängigen Strahlteiler 3 in den Verstärkerresonator 4' eingekoppelt. Zu diesem Zeitpunkt liegt eine λ/2-Spannung an der Pockelszelle 9 an, welche die Polarisation des Pulses um 90° dreht. Sobald der Puls die Pockelszelle 9 verlassen hat, wird diese Spannung ausgeschaltet, so dass der Puls im Resonator umläuft und verstärkt wird. Anschließend wird wiederum die λ/2-Spannung an die Pockelszelle angelegt, so dass die Polarisation erneut um 90° gedreht wird und der verstärkte Puls 12 den Verstärkerresonator 4' durch den Strahlteiler 3 verlässt. Zwei Periskop-Teleskope 14a,14b und 14a',14b' dienen zur Strahlformung. Das erste Periskop-Teleskop 14a, 14b formt aus dem runden Strahl vor dem Durchgang durch die Pockelszelle 9 einen elliptischen Strahl. Das zweite Periskop-Teleskop 14b', 14a' formt aus dem elliptischen Strahl wieder einen runden Strahl. Die Umlenkspiegel 15, 15' dienen zur Reduzierung der Baugröße der Verstärkeranordnung 1 ". Bei einem solchen Ringresonator muss im Gegensatz zu der in Fig. 1 gezeigten Ausführung (linearer Resonator) eine doppelt so hohe Spannung an der Pockelszelle angelegt werden, da die Pockelszelle pro Umlauf nur einmal vom Puls durchlaufen wird. Ein Vorteil der Ringresonator-Ausführung gegenüber der in Fig. 1 gezeigten Ausführung ist, dass der Strahlengang der verstärkten Laserpulse 12 bereits räumlich vom dem der Seed-Pulse 2 getrennt ist.

In Fig. 6 ist schematisch ein erfindungsgemäßer Ultrakurzpulslaser 100 gezeigt. Die von einem Seed-Laser 16 erzeugten Seed-Laserpulse gelangen, wenn notwendig über eine Trenneinheit 17, zu einer erfindungsgemäßen Verstärkeranordnung 1, 1', 1 ". Die verstärkten Laserpulse werden nach Verlassen der Verstärkeranordnung durch die Trenneinheit 17, beispielsweise durch einem 45°-Faraday-Rotator und einen polarisationsabhängigen Strahlteiler, von den Seed-Laserpulsen separiert.

Außerhalb der Verstärkeranordnung ist ein externes Schaltelement 18 zur Modulation des verstärkten Strahls angeordnet, das ebenfalls einen rechteckförmigen Querschnitt aufweisen kann.

## Patentansprüche

1. Anordnung (1; 1'; 1 ") zum Erzeugen und/oder Verstärken eines insbesondere gepulsten Laserstrahls mit rundem Strahlquerschnitt, umfassend einen Verstärkerresonator (4; 4') mit einem Verstärkungselement (10; 10') und einer Kopplungseinrichtung (3), die den verstärkten Laserstrahl (11a, 11 b) abhängig vom Schaltzustand eines elektro-optischen oder akusto-optischen Schaltelements (9; 9') zumindest zum größten Teil aus dem Verstärkerresonator (4; 4') auskoppelt, wobei eine Strahlformungsoptik (7; 14) zum Umformen zwischen zwei unterschiedlichen Strahlquerschnitten des Laserstrahls vorgesehen ist, wobei der Querschnitt des elektro-optischen oder akusto-optischen Schaltelements (9; 9') rechtwinklig zur Strahlrichtung annähernd rechteckförmig ist,
**dadurch gekennzeichnet,**
**dass** der Laserstrahl beim Eintritt in das elektro-optische oder akusto-optische Schaltelement (9; 9') einen elliptischen Strahlquerschnitt aufweist,
**dass** die Strahlformungsoptik (7; 14) den runden Strahlquerschnitt des Laserstrahls auf einen an den rechteckförmigen Querschnitt des elektro-optischen oder akusto-optischen Schaltelements (9; 9') angepassten, elliptischen Strahlquerschnitt umformt, dass
die elliptische Strahlquerschnittfläche größer als die kleinste runde Strahlquerschnittfläche im Strahlengang des Verstärkerresonators (4; 4') ist,
und/oder
**dass** der rechtwinklig zur Strahlrichtung annähernd rechteckförmige Querschnitt des elektro-optischen oder akusto-optischen Schaltelements (9; 9') durch eine kürzere und eine längere Seite definiert ist, wobei die Länge der kürzeren Seite kleiner und die Länge der längeren Seite größer als der größte Strahldurchmesser des runden Laserstrahls (11 a) im Verstärkerresonator (4; 4') ist.

2. Verstärkeranordnung nach Anspruch 1, **dadurch gekennzeichnet, dass** die Strahlformungsoptik (7; 14) innerhalb des Verstärkerresonators (4; 4') angeordnet ist.

3. Verstärkeranordnung nach Anspruch 2, **dadurch gekennzeichnet, dass** die Kopplungseinrichtung (3) im Verstärkerresonator (4; 4') angeordnet ist.

4. Verstärkeranordnung nach Anspruch 1, **dadurch gekennzeichnet, dass** die Strahlformungsoptik (7; 14) außerhalb des Verstärkerresonators (4; 4') angeordnet ist.

5. Verstärkeranordnung nach einem der vorhergehenden Ansprüche, **dadurch gekennzeichnet, dass** innerhalb oder außerhalb des Verstärkerresonators (4; 4') eine weitere Strahlformungsoptik angeordnet ist, die den elliptischen Strahlquerschnitt in einen runden Strahlquerschnitt umformt.

6. Verstärkeranordnung nach einem der vorhergehenden Ansprüche, **dadurch gekennzeichnet, dass** die Strahlformungsoptik (7; 14) für beide Hauptachsen des erzeugten elliptischen Strahls (11 b) als Teleskop wirkt.

7. Verstärkeranordnung nach einem der vorhergehenden Ansprüche, **dadurch gekennzeichnet, dass** die Strahlformungsoptik (7; 14) mindestens zwei optische Elemente mit unterschiedlicher Brennweite für die beiden Hauptachsen des Strahlquerschnitts aufweist.

8. Verstärkeranordnung nach Anspruch 7, **dadurch gekennzeichnet, dass** die optischen Elemente Toroidspiegel, zum Laserstrahl verkippte Konkavspiegel (14a, 14b, 14a', 14b'), zum Laserstrahl verkippte Linsen, anamorphotische Linsen, Doppellinsen (7a; 7b) aus jeweils einer plankonvexen und plankonkaven Zylinderlinse mit gegeneinander um 90° gedrehten Symmetrieebenen oder anamorphotische Gradientenlinsen oder eine Kombination davon umfassen.

9. Verstärkeranordnung nach einem der Ansprüche 1 bis 5, **dadurch gekennzeichnet, dass** die Strahlformungsoptik mindestens ein anamorphotisches Prismenpaar umfasst.

10. Verstärkeranordnung nach einem der vorhergehenden Ansprüche, **dadurch gekennzeichnet, dass** die Kopplungseinrichtung (3) einen polarisationsabhängigen Strahlteiler aufweist und dass das elektro-optische Schaltelement (9) eine Pockelszelle aufweist.

11. Verstärkeranordnung nach einem der Ansprüche 1 bis 9, **dadurch gekennzeichnet, dass** ein akusto-optischer Schalter (9') sowohl als Kopplungseinrichtung als auch als Schaltelement wirkt.

12. Verstärkeranordnung nach einem der vorhergehenden Ansprüche, **dadurch gekennzeichnet, dass** die Kopplungseinrichtung (3) einen zu verstärkenden Laserstrahl (2) in den Verstärkerresonator (4; 4') ein koppelt und den verstärkten Laserstrahl (12) abhängig vom Schaltzustand des elektro-optischen oder akusto-optischen Schaltelements (9; 9') aus dem Verstärkerresonator (4; 4') auskoppelt.

13. Ultrakurzpulslaser (100) mit einem Seed-Laser (16) zur Erzeugung von Seed-Laserpulsen und mit einer Anordnung (1; 1'; 1 ") nach Anspruch 12 zum Verstärken der Seed-Laserpulse.

14. Auskoppelmodulierter Ultrakurzpulslaser mit einer Verstärkeranordnung (1; 1'; 1 ") nach einem der Ansprüche 1 bis 11, **dadurch gekennzeichnet, dass** ein optisches Element zur Modenkopplung innerhalb der Verstärkeranordnung (1; 1'; 1") angeordnet ist.

## Claims

1. Arrangement (1;1';1") for generating and/or amplifying a laser beam, particularly a pulsed laser beam, having a circular beam cross-section, comprising an amplifier resonator (4;4') having an amplification element (10;10') and a coupling device (3) which decouples the amplified laser beam (11a, 11b), at least predominantly, from the amplifier resonator (4,4') in accordance with the switching state of an electro-optical or acousto-optical switching element (9;9'), with a beam-shaping optical unit (7;14) being provided for shaping between two different beam cross-sections of the laser beam, with the cross-section of the electro-optical or acousto-optical switching element (9;9') being substantially rectangular perpendicularly relative to the beam direction,
**characterised in that**
the laser beam has an elliptical beam cross-section when it enters the electro-optical or acousto-optical switching element (9;9'),
**in that** the beam-shaping optical unit (7;14) shapes the circular beam cross-section of the laser beam to an elliptical beam cross-section which is adapted to the rectangular cross-section of the electro-optical or acousto-optical switching element (9;9'),
**in that** the elliptical beam cross-section surface-area is greater than the smallest circular beam cross-section surface-area in the beam path of the amplifier resonator (4;4'),
and/or **in that**
the substantially rectangular cross-section of the electro-optical or acousto-optical switching element (9;9') perpendicularly relative to the beam direction is defined by a shorter and a longer side, with the length of the shorter side being less than and the length of the longer side being greater than the largest beam diameter of the circular laser beam (lla) in the amplifier resonator (4;4').

2. Amplifier arrangement according to claim 1, **characterised in that** the beam-shaping optical unit (7;14) is arranged inside the amplifier resonator (4;4').

3. Amplifier arrangement according to claim 2, **characterised in that** the coupling device (3) is arranged in the amplifier resonator (4;4').

4. Amplifier arrangement according to claim 1, **characterised in that** the beam-shaping optical unit (7;14) is arranged outside the amplifier resonator (4;4').

5. Amplifier arrangement according to any one of the preceding claims, **characterised in that** there is arranged, inside or outside the amplifier resonator (4;4'), an additional beam-shaping optical unit which shapes the elliptical beam cross-section into a circular beam cross-section.

6. Amplifier arrangement according to any one of the preceding claims, **characterised in that** the beam-shaping optical unit (7;14) acts as a telescope for the two main axes of the elliptical beam (11b) produced.

7. Amplifier arrangement according to any one of the preceding claims, **characterised in that** the beam-shaping optical unit (7;14) has at least two optical elements having different focal distances for the two main axes of the beam cross-section.

8. Amplifier arrangement according to claim 7, **characterised in that** the optical elements comprise toroid mirrors, concave mirrors (14a, 14b, 14a', 14b') which are inclined relative to the laser beam, lenses which are inclined relative to the laser beam, anamorphotic lenses, double lenses (7a;7b) each comprising a plano-convex and plano-concave cylindrical lens with planes of symmetry rotated through 90° relative to each other or anamorphotic gradient lenses, or a combination thereof.

9. Amplifier arrangement according to any one of claims 1 to 5, **characterised in that** the beam-shaping optical unit comprises at least one anamorphotic prism pair.

10. Amplifier arrangement according to any one of the preceding claims, **characterised in that** the coupling device (3) has a polarisation-dependent beam splitter and **in that** the electro-optical switching element (9) has a Pockels cell.

11. Amplifier arrangement according to any one of claims 1 to 9, **characterised in that** an acousto-optical switch (9') acts both as a coupling device and as a switching element.

12. Amplifier arrangement according to any one of the preceding claims, **characterised in that** the coupling device (3) couples a laser beam (2) which is to be amplified into the amplifier resonator (4;4') and decouples the amplified laser beam (12) from the amplifier resonator (4;4') in accordance with the switching state of the electro-optical or acousto-optical switching element (9;9').

13. Ultra-short pulse laser (100) having a seed laser (16) for generating seed laser pulses and having an arrangement (1;1',1") according to claim 12 in order to amplify the seed laser pulses.

14. Decoupling-modulated ultra-short pulse laser having an amplifier arrangement (1; 1', 1") according to any one of claims 1 to 11, **characterised in that** an optical element for mode-locking is arranged inside the amplifier arrangement (1; 1'; 1").

## Revendications

1. Agencement (1 ;1'; 1") servant à générer et/ou amplifier un faisceau laser en particulier pulsé à section de faisceau circulaire, comprenant un résonateur amplificateur (4 ; 4') avec un élément d'amplification (10 ; 10') et un équipement de couplage (3) qui découple au moins en majeure partie le faisceau laser amplifié (11a, 11b) du résonateur amplificateur (4 ; 4') en fonction de l'état de commutation d'un élément de commutation électro-optique ou acousto-optique (9 ; 9'), une optique de mise en forme de faisceau (7 ; 14) pour la conversion entre deux sections de faisceau différentes du faisceau laser étant prévue, la section de l'élément de commutation électro-optique ou acousto-optique (9 ; 9') perpendiculairement à la direction de faisceau étant approximativement rectangulaire,
**caractérisé en ce**
**que** le faisceau laser présente une section de faisceau elliptique lors de l'entrée dans l'élément de commutation électro-optique ou acousto-optique (9 ; 9'),
**que** l'optique de mise en forme de faisceau (7 ; 14) convertit la section de faisceau circulaire du faisceau laser en une section de faisceau elliptique adaptée à la section rectangulaire de l'élément de commutation électro-optique ou acousto-optique (9 ; 9'),
**que** la surface de section de faisceau elliptique est plus grande que la plus petite surface de section de faisceau circulaire dans le chemin optique du résonateur amplificateur (4 ; 4'), et/ou
**que** la section approximativement rectangulaire de l'élément de commutation électro-optique ou acousto-optique (9 ; 9') perpendiculairement à la direction de faisceau est définie par un côté plus court et un côté plus long, la longueur du côté plus court étant plus petite et la longueur du côté plus long plus grande que le plus grand diamètre de faisceau du faisceau laser circulaire (11a) dans le résonateur amplificateur (4 ; 4').

2. Agencement amplificateur selon la revendication 1, **caractérisé en ce que** l'optique de mise en forme de faisceau (7 ; 14) est disposée à l'intérieur du résonateur amplificateur (4 ; 4').

3. Agencement amplificateur selon la revendication 2, **caractérisé en ce que** l'équipement de couplage (3) est disposé dans le résonateur amplificateur (4 ; 4').

4. Agencement amplificateur selon la revendication 1, **caractérisé en ce que** l'optique de mise en forme de faisceau (7 ; 14) est disposée à l'extérieur du résonateur amplificateur (4 ; 4').

5. Agencement amplificateur selon l'une des revendications précédentes, **caractérisé en ce qu'**à l'intérieur ou à l'extérieur du résonateur amplificateur (4 ; 4') est disposée une autre optique de mise en forme de faisceau qui convertit la section de faisceau elliptique en une section de faisceau circulaire.

6. Agencement amplificateur selon l'une des revendications précédentes, **caractérisé en ce que** l'optique de mise en forme de faisceau (7 ; 14) agit comme télescope pour les deux axes principaux du faisceau elliptique (11b) généré.

7. Agencement amplificateur selon l'une des revendications précédentes, **caractérisé en ce que** l'optique de mise en forme de faisceau (7 ; 14) présente au moins deux éléments optiques de distance focale différente pour les deux axes principaux de la section de faisceau.

8. Agencement amplificateur selon la revendication 7, **caractérisé en ce que** les éléments optiques comprennent des miroirs toroïdaux, des miroirs concaves (14a, 14b, 14a', 14b') inclinés par rapport au faisceau laser, des lentilles inclinées par rapport au faisceau laser, des lentilles anamorphosiques, des doubles lentilles (7a ; 7b) composées d'une lentille cylindrique plan-convexe et d'une lentille cylindrique plan-concave avec des plans de symétrie tournés de 90° l'un par rapport à l'autre ou des lentilles à gradients anamorphosiques ou une combinaison de ceux-ci.

9. Agencement amplificateur selon l'une des revendications 1 à 5, **caractérisé en ce que** l'optique de mise en forme de faisceau comprend au moins une paire de prismes anamorphosiques.

10. Agencement amplificateur selon l'une des revendications précédentes, **caractérisé en ce que** l'équipement de couplage (3) présente un diviseur de faisceau dépendant de la polarisation et que l'élément de commutation électro-optique (9) présente une cellule de Pockels.

11. Agencement amplificateur selon l'une des revendications 1 à 9, **caractérisé en ce qu'**un commutateur acousto-optique (9') agit aussi bien comme équipement de couplage que comme élément de commutation.

12. Agencement amplificateur selon l'une des revendications précédentes, **caractérisé en ce que** l'équipement de couplage (3) couple un faisceau laser à amplifier (2) dans le résonateur amplificateur (4 ; 4') et découple le faisceau laser amplifié (12) du résonateur amplificateur (4 ; 4') en fonction de l'état de commutation de l'élément de commutation électro-optique ou acousto-optique (9 ; 9').

13. Laser à impulsions ultracourtes (100) avec un laser d'ensemencement (16) pour générer des impulsions laser d'ensemencement et avec un agencement (1 ; 1' ; 1") selon la revendication 12 pour amplifier les impulsions laser d'ensemencement.

14. Laser à impulsions ultracourtes à découplage modulé avec un agencement amplificateur (1 ;1' ; 1") selon l'une des revendications 1 à 11, **caractérisé en ce qu'**un élément optique pour le couplage de modes est disposé à l'intérieur de l'agencement amplificateur (1 ;1' ; 1").
